# EUROPEAN PATENT SPECIFICATION

(11) **EP 2 821 323 B1**
(45) Date of publication and mention of the grant of the patent: **18.04.2018**
(21) Application number: 14175117.2
(22) Date of filing: 01.07.2014
(51) Int. Cl.: B62D 11/08

(54) **Working vehicle**
Nutzfahrzeug
Véhicule de travail

(30) Priority: 02.07.2013 JP 2013139008
(43) Date of publication of application: 07.01.2015
(73) Proprietor: Iseki & Co., Ltd., Matsuyama-shi, Ehime 799-2692 (JP)
(72) Inventor: Matsukawa, Teruki, Iyo-gun, Ehime 791-2193 (JP)
(74) Representative: Grünecker Patent- und Rechtsanwälte PartG mbB

(56) References cited:
- EP-A2- 0 787 615
- EP-A2- 0 863 040
- US-A- 5 913 950

## Description

### BACKGROUND OF THE INVENTION

### Field of the Invention

This invention relates to a working vehicle such as a tractor and so forth, and relates to a parking brake device which comprises paired brake pedals that are configured to independently carry out braking manipulation of the left and right brakes.

### Related art of the Invention

Generally, in a tractor a left brake pedal and a right brake pedal are configured in such a manner that braking manipulation of the left brake and right brake which are provided at the left and right axle parts can be independently carried out, and turning can be carried out during farm field working and so forth with a small turning radius. And, at the time of parking the above mentioned left-and-right brakes are operated and the parking brake is configured.

For example, as in Japanese Patent Application Publication No. Hei 7-304433, at the transmission case as a vehicle body a parking lever is provided, and carried out is interlocking with the left-and-right brakes which are configured at the left and right axle parts of the rear wheels. Namely, in case rotational moving manipulation of the parking brake lever is carried out, then the engaging part of the circular shape stick member of the lower end of the manipulation rod engages with the left-and-right arms which are provided at the base parts of the left-and-right brake pedals respectively.

The upper end of the manipulation rod is connected to the parking brake lever, and the manipulation rod is arranged right below the parking brake lever. Twisting such that the manipulation rod tilts to left or right does not occur when the parking brake lever is manipulated, and parking brake manipulation can be stably carried out.

The european patent EP0863040 discloses a travelling operation device for a working vehicle, wherein a cruising control or gear hold mechanism, which can artificially hold in a desired speed change position a speed changing instrument of a stepless transmission biased toward the neutral side and which is interlocked to release the locking of the locking mechanism by treading a master brake pedal.

### SUMMARY OF THE INVENTION

By means of the above-mentioned configuration, parking brake manipulation without twisting can be performed with an uncomplicated configuration, but the lower end engaging part of the manipulation rod is allowed to directly act on the left-and-right arms provided at the base parts of the left-and-right brake pedals, so necessitated is extra manipulation force to carry out rotational moving manipulation to the braking side also for the left-and-right brake pedals.

This invention, although being of a simple configuration, at the time of manipulating of the parking brake lever, enables independent linking which does not accompany frontward rotational moving of the left-and-right brake pedals, and undertakes improvement of manipulability.

The 1^{st} aspect of the present invention is a working vehicle, comprising:
a left brake mechanism (29L) which is configured to brake a left vehicle wheel (3L);
a right brake mechanism (29R) which is configured to brake a right vehicle wheel (3R);
a left brake pedal (44L) which is configured to operate in response to stepping manipulation, and via a left brake rod (33L) allow the left brake mechanism (29L) to work;
a right brake pedal (44R) which is configured to operate in response to stepping manipulation, and via a right brake rod (33R) allow the right brake mechanism (29R) to work;
a brake lever (56) which is configured to operate in response to manual manipulation, via the left brake rod (33L) allow the left brake mechanism (29L) to work, and via the right brake rod (33R) allow the right brake mechanism (29R) to work; and
non-operation mechanisms which are configured not to allow, when the brake lever (56) operates in response to the manual manipulation, the left brake pedal (44L) and the right brake pedal (44R) to operate.
The 2^{nd} aspect of the present invention is a working vehicle according to the 1^{st} aspect of the present invention, wherein
the non-operation mechanisms are mechanisms such that:
   an end part side of the left brake rod (33L) is connected to a root side of the left brake pedal (44L) via a brake shaft (40) which is capable of rotationally moving, in such a manner that the left brake pedal (44L) does not operate when the brake lever (56) operates in response to the manual manipulation; and
   an end part side of the right brake rod (33R) is connected to a root side of the right brake pedal (44R), in such a manner that the right brake pedal (44R) does not operate when the brake lever (56) operates in response to the manual manipulation.

In case, based on parking brake manipulation, the parking brake interlocking arm 55 is operated, then the brake rods 33L and 33R of the left and right operate the brake mechanisms 29L and 29R. On the other hand, the non-operation mechanisms are provided, so interlocking to the left and right brake pedals 44L and 44R is not performed.

The 3^{rd} aspect of the present invention is a working vehicle according to the 2^{nd} aspect of the present invention, comprising a first tube boss (42) which is anchored to the right brake pedal (44R), and is loosely fitted to the brake shaft (40) so as to be capable of rotationally moving, wherein
to the first tube boss (42), an engaging member (43) which the end part side of the right brake rod (33R) is capable of engaging with and sliding through is anchored,
when the right brake pedal (44R) operates in response to the stepping manipulation, the first tube boss (42), to which the engaging member (43) is anchored, rotationally moves, the end part side of the right brake rod (33R) engages with the engaging member (43), the right brake rod (33R) moves, and thereby the right brake mechanism (29R) works, and
when the brake lever (56) operates in response to the manual manipulation, the end part side of the right brake rod (33R) does not engage with the engaging member (43) and slides therethrough, the first tube boss (42), to which the engaging member (43) is anchored, does not rotationally move, and thereby the right brake pedal (44R), to which the first tube boss (42) is anchored, does not operate.

Based on parking brake manipulation the parking brake interlocking arm 55 operates, and the brake rod 33R linkingly works and brakes the brake mechanism 29R. At this time, by the non-operation mechanism propagation of interlocking from the brake rod 33R to the brake pedal 44R is not allowed to be carried out.

The 4^{th} aspect of the present invention is a working vehicle according to the 2^{nd} aspect of the present invention, comprising a second tube boss (45) which is anchored to the left brake pedal (44L), and is loosely fitted to the brake shaft (40) so as to be capable of rotationally moving, wherein
to one end side of the brake shaft (40), a driven member (46) is anchored,
to other end side of the brake shaft (40), the end part side of the left brake rod (33L) is anchored,
in the second tube boss (45), a concavity part (45b) which the driven member (46) is capable of engaging with is formed,
when the left brake pedal (44L) operates in response to the stepping manipulation, the second tube boss (45), in which the concavity part (45b) is formed, rotationally moves, the driven member (46) engages with the concavity part (45b), the brake shaft (40), to which the driven member (46) is anchored, rotationally moves, the left brake rod (33L), the end part side of which is anchored to the brake shaft (40), moves, and thereby the left brake mechanism (29L) works, and
when the brake lever (56) operates in response to the manual manipulation, the driven member (46) does not engage with the concavity part (45b), the second tube boss (45), in which the concavity part (45b) is formed, does not rotationally move, and thereby the left brake pedal (44L), to which the second tube boss (45) is anchored, does not operate.

Based on parking brake manipulation the parking brake interlocking arm 55 operates, and the brake rod 33L linkingly works via the brake shaft 40 and the driven member 46 and brakes the brake mechanism 29L. At this time, by the non-operation mechanism propagation of interlocking from the driven member 46 to the brake pedal 44L is not allowed to be carried out.

The 5^{th} aspect of the present invention is a working vehicle according to any of the 1^{st} to 4^{th} aspects of the present invention, wherein
the brake lever (56) is connected to both of the end part side of the left brake rod (33L) and the end part side of the right brake rod (33R) via a middle rod (57) and a parking brake interlocking arm (55).

In case the parking brake lever 56 is manipulated, then the parking brake interlocking arm 55 is operated via the middle rod 57 and the left and right brake mechanisms 29L and 29R are interlocked to be in a braking state.

By means of any of the 1^{st} to 4^{th} aspects of the present invention, in case, based on parking brake manipulation the parking brake interlocking arm 55 is operated, then the brake mechanisms 29L and 29R are operated by the linking mechanisms, but the non-operation mechanisms are provided, so interlocking to the left and right brake pedals 44L and 44R is not performed. Because of this, parking brake manipulation force can be reduced.

By means of the 5^{th} aspect of the present invention, because the length of the parking brake interlocking arm 55 can be ensured, when pulling-up manipulation of the parking brake lever 56 is carried out, manipulation force of the parking brake lever 56 can be allowed to be small.

### BRIEF DESCRIPTION OF THE DRAWINGS

FIG. 1 is a side view of a tractor for agriculture of an embodiment of the present invention;

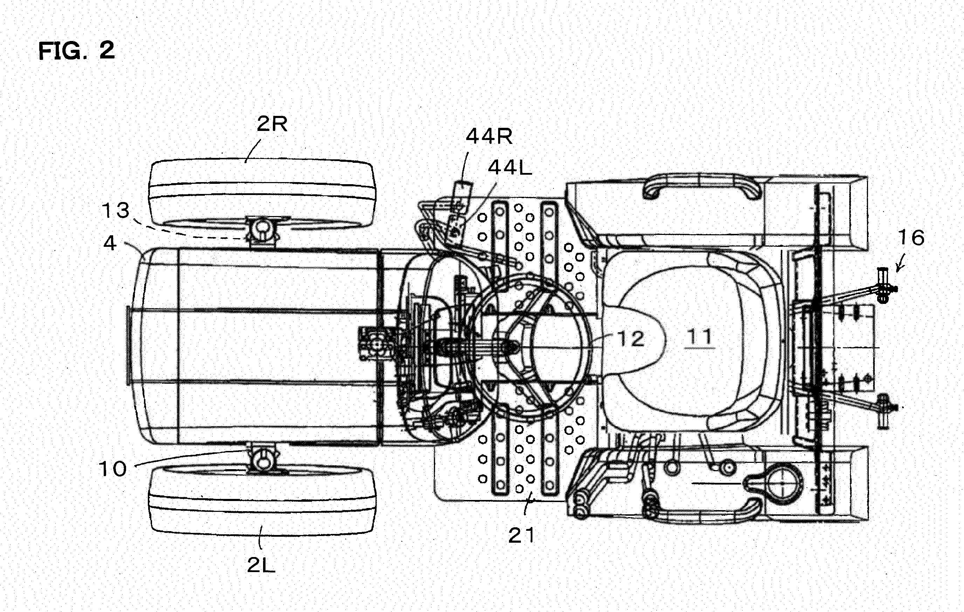

FIG. 2 is a plan view of a tractor for agriculture of an embodiment of the present invention;

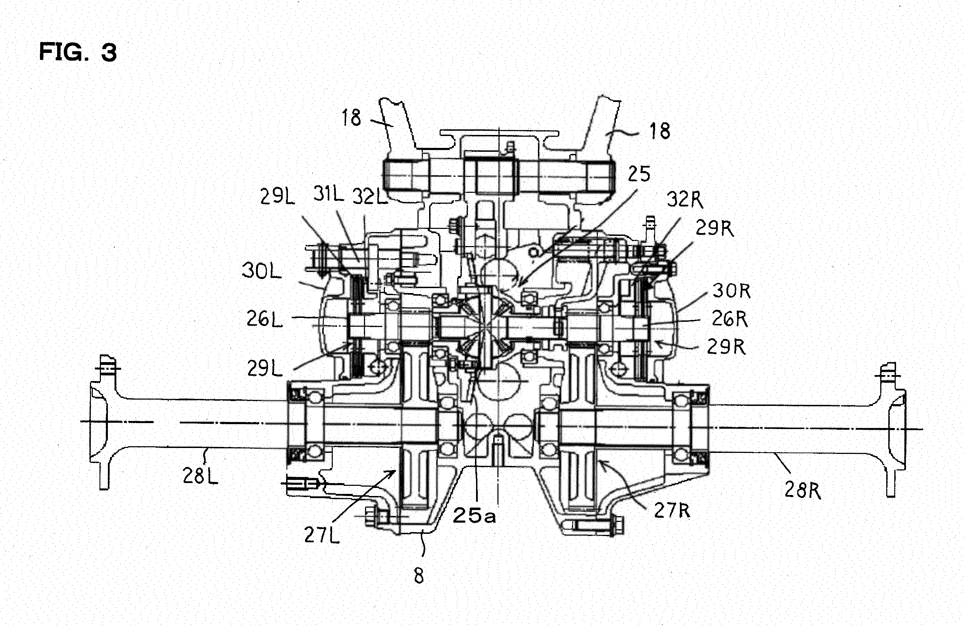

FIG. 3 is an enlarged section view of the rear axle parts of an embodiment of the present invention;

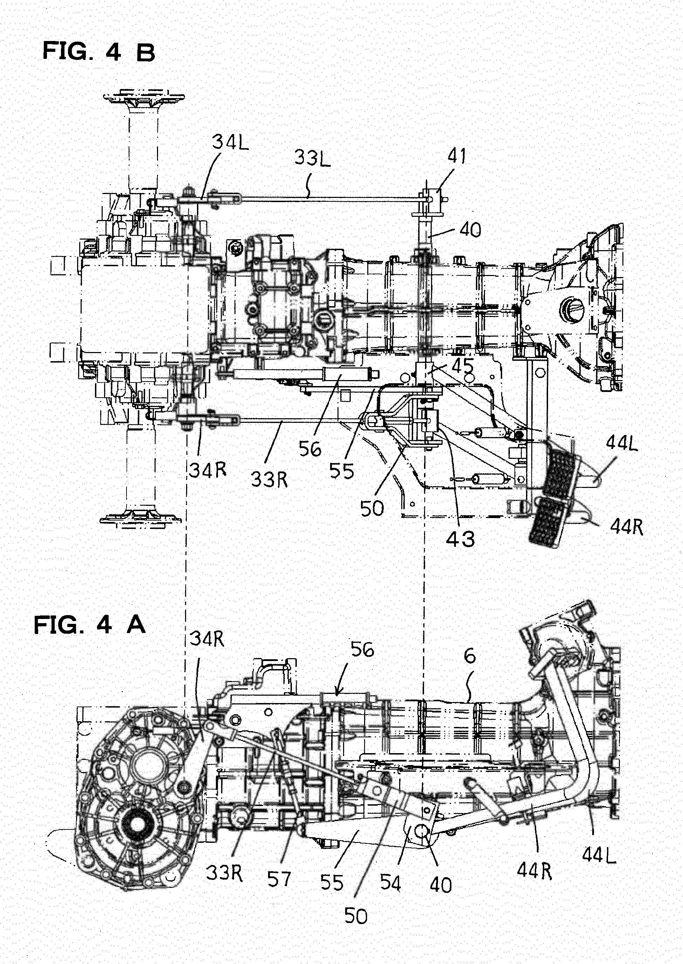

FIGS. 4A and 4B are a right side view and a plan view which show the interlocking configuration to the left and right brake mechanisms of an embodiment of the present invention;

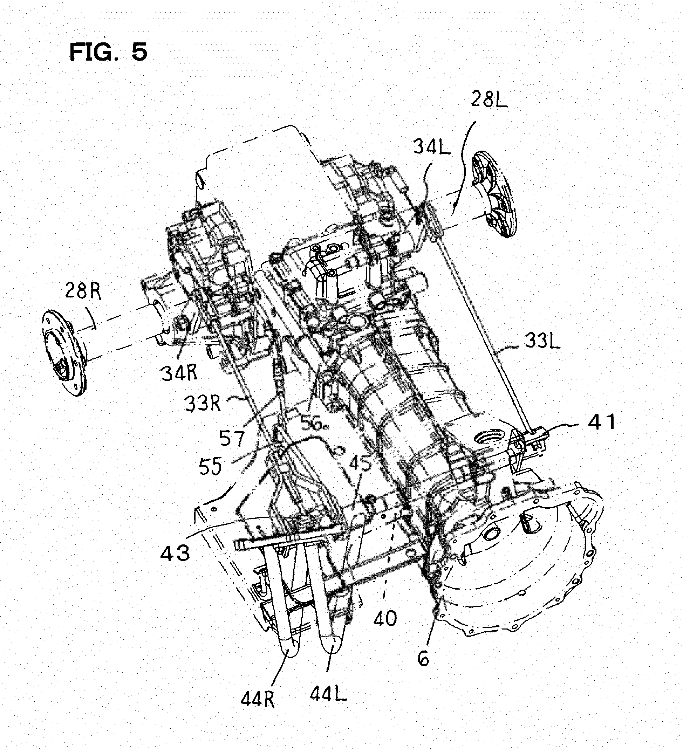

FIG. 5 is a perspective view which shows the interlocking configuration to the left and right brake mechanisms of an embodiment of the present invention;

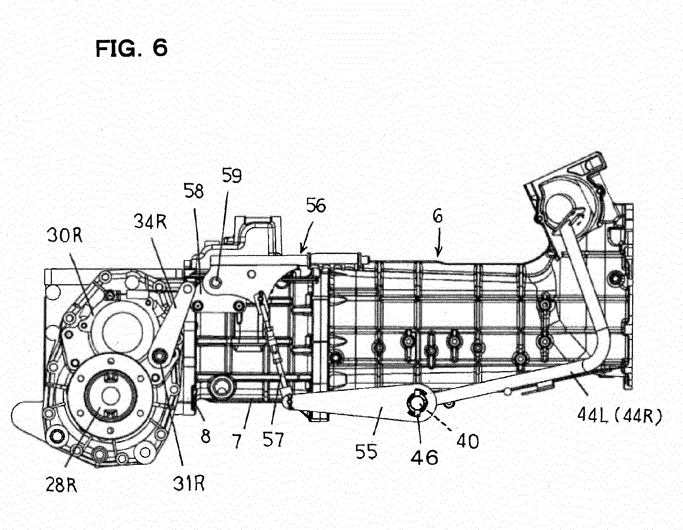

FIG. 6 is a side view which shows the relationship between the parking brake and the left brake pedal of an embodiment of the present invention;
FIGS. 7A and 7B are section views of the brake shaft part of an embodiment of the present invention;
FIG. 8 is a side view which shows the left brake rod of an embodiment of the present invention;
FIG. 9 is a perspective view which shows the relationship between the right brake pedal and the parking brake of an embodiment of the present invention;
FIG. 10A is a perspective view which shows the safety frame installation state of an embodiment of the present invention, and
FIG. 10B is a perspective view which shows the safety frame un-installation state of an embodiment of the present invention;

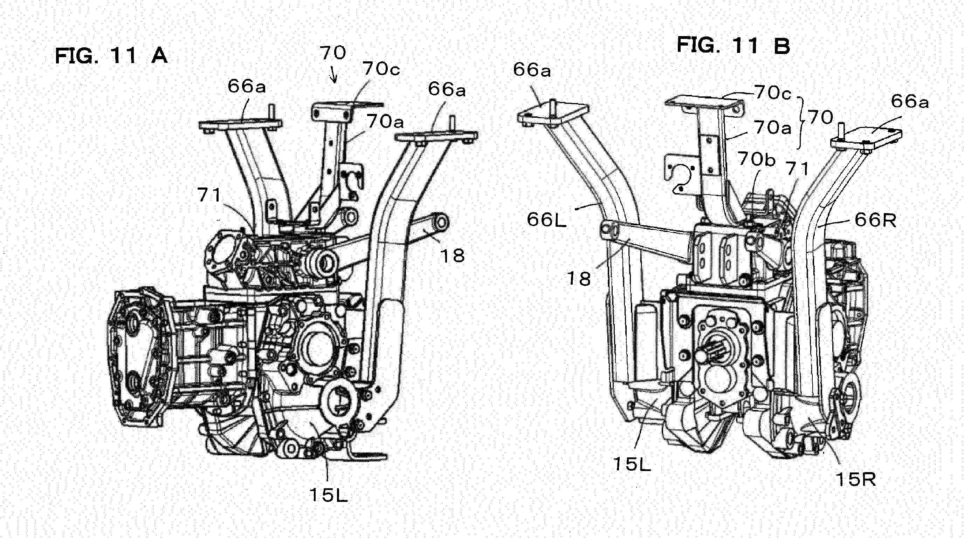

FIGS. 11A and 11B are perspective views of the lower part frame of an embodiment of the present invention;

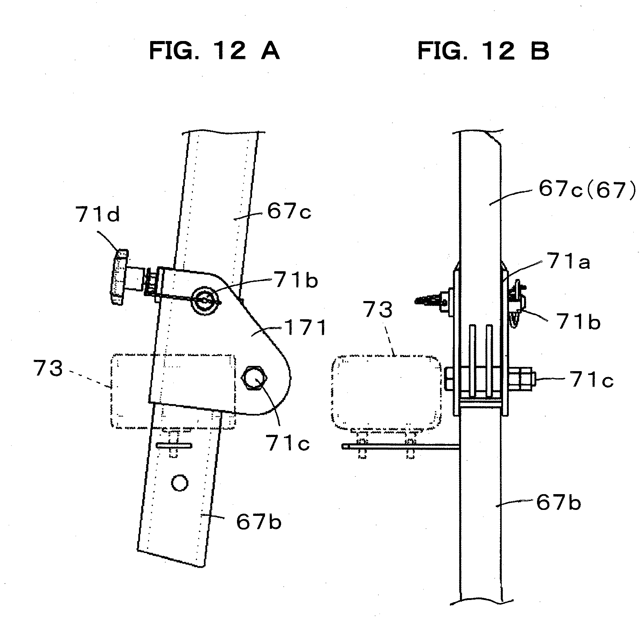

FIGS. 12A and 12B are a side view and a rear view of the connection bracket of an embodiment of the present invention; and
FIGS. 13A and 13B are a perspective view and a side view which show the seat lower part configuration of an embodiment of the present invention.

### Description of Symbols

- 1: traveling vehicle body
- 3L, 3R: rear wheel
- 29L, 29R: brake mechanism
- 31L, 31R: brake operation shaft
- 33L, 33R: brake rod
- 40: brake shaft
- 42: first tube boss
- 43: L-type engaging metal fitting (engaging member)
- 45: second tube boss
- 44L, 44R: brake pedal
- 46: driven pin (driven member)
- 55: parking brake interlocking arm

### PREFERRED EMBODIMENTS OF THE INVENTION

Embodiments of this invention is described based on the drawings.

The traveling vehicle body 1 comprises the front wheels 2L and 2R (regarding a configuration of a left and right pair, L shows the left side, and R shows the right side, hereinafter the same) and the rear wheels 3L and 3R, and is equipped with the engine 5 inside the bonnet 4 at the front part thereof. The clutch housing 6 at the rear part of the engine 5, the front part transmission case 7 and the rear part transmission case 8 are connected and a rigid-body configuration is realized.

At the front axle bracket 9 at the lower part of the engine 5, the front axle case 10 is supported in such a manner that the left and right sides swing upward and downward around the shaft center along the front and rear direction.

At the left and right end parts of the front axle case 10, the front wheels 2L and 2R are installed in such a manner that the front wheels interlock through steering by the steering handle 12 frontward of the seat 11 of the vehicle body 1. Inside the front axle case 10, the front axle 13 is provided, and transmission to the front wheels is carried out.

In the left and right of the rear part transmission case 8, the rear axle cases 15L and 15R are installed which internally install the rear axles 14L and 14R. At the respective end parts of the rear axles 14L and 14R, the rear wheels 3L and 3R are installed.

To the rear part of the vehicle body 1, by the 3 points linkage mechanism 16, an implement such as the rotary cultivator 17 and so forth is connected so as to ascend/descend ad libitum. Above the rear part transmission case 8, the oil hydraulic technique lift arms 18 and 18 are provided which are configured to interlock the lift rods 17 and 17 of the 3 points linkage mechanism 16 and allow the implement to ascend/descend.

The seat 11 is arranged at the upper part of the seat floor 20 which is provided between the left and right rear wheel fenders 19 and 19. The seat floor 20 accompanies reinforcing structure and is configured from the horizontal face part 20a on which the seat 11 is placed and the vertical face part 20b, and to the vertical face part 20b the step floor 21 is bonded.

Inside the rear part transmission case 8, transferred to the drive shaft is the motive power the speed-changing of which is carried out by way of the main speed-changing mechanism and the auxiliary speed-changing mechanism and, after transmission from the drive shaft to the ring gear 25a of the differential mechanism 25 is carried out, enabled is the differential output to the rear wheels 3L and 3R by way of the differential mechanism 25, the left and right differential output shafts 26L and 26R, the speed-reduction gears 27L and 27R and the left and right rear axle parts 28L and 28R.

In the midst of the respective left and right differential output shafts 26L and 26R, inside the brake cases 30L and 30R which are formed in such a manner that the brake cases cover the rear part transmission case 8, the left and right brake mechanisms 29L and 29R of friction plates are provided. In the respective left and right side brakes 29L and 29R, the pressure plates 32L and 32R are pressed by the pressure arms which are configured to rotationally move around the brake operation shafts 31L and 31R, braking states of the left and right brake mechanisms 29L and 29R are realized, and the rear wheels 3L and 3R can be braked.

To the brake operation shafts 31L and 31R which extend out to the outside of the brake cases 30L and 30R, the brake arms 34L and 34R are connected in the exterior part of the brake cases 30L and 30R, and connected to the brake arms 34L and 34R are the brake rods 33L and 33R.

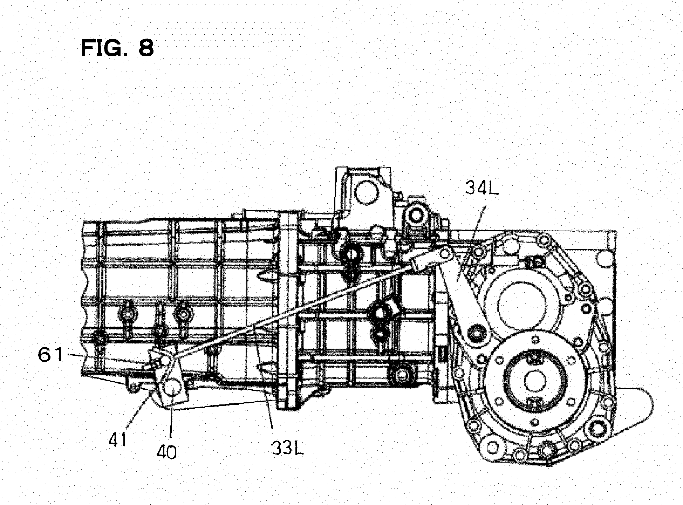

Below the rear lower part of the clutch housing 6, the brake shaft 40 which goes through in the left and right direction is provided. To the one (the left brake side in FIG. 8) of the left and right protruding ends of the brake shaft 40, the L-type engaging metal fitting 41 is connected which is provided integrally with the brake shaft 40 in such a manner that the left brake rod 33L is configured to interlock, accompanying the rotational moving of the brake shaft 40.

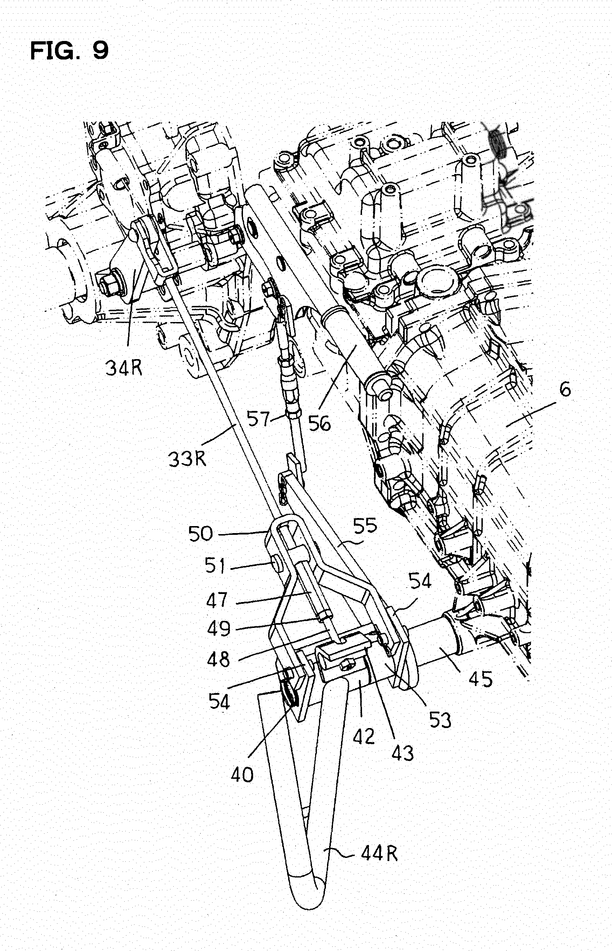

Next, mainly referring to FIG. 9, descriptions are given regarding the non-operation mechanisms of the left and right brake pedals. Note that, in FIG. 9, only the non-operation mechanism of the right brake pedal is basically shown.

Additionally, the non-operation mechanism of the left brake pedal and the non-operation mechanism of the right brake pedal, which will be described in detail in what follows, may of course change places with each other symmetrically.

At the other (the right brake side) of the left and right protruding ends of the brake shaft 40, which is on the right side of the clutch housing 6, the first tube boss 42 is loosely fitted to the brake shaft 40, and connected is the L-type engaging metal fitting 43 as an engaging member which is anchored to the first tube boss 42 in such a manner that the right brake rod 33R is configured to interlock, accompanying the rotational moving of the first tube boss 42.

Further, to the first tube boss 42, the base part of the right brake pedal 44R is anchored. Further, in the right side space of the clutch housing 6, to the second tube boss 45 which is loosely fitted to the brake shaft 40 at a position adjacent to the first tube boss 42, the base part of the left brake pedal 44L is anchored.

Descriptions are given regarding the configuration relating to linking of the left brake pedal 44L and the brake shaft 40.

The driven pin 46 as a driven member which goes through the brake shaft 40 is provided and, on the end face of the second tube boss 45 which supports the left brake pedal 44L, concavity and convexity are formed.

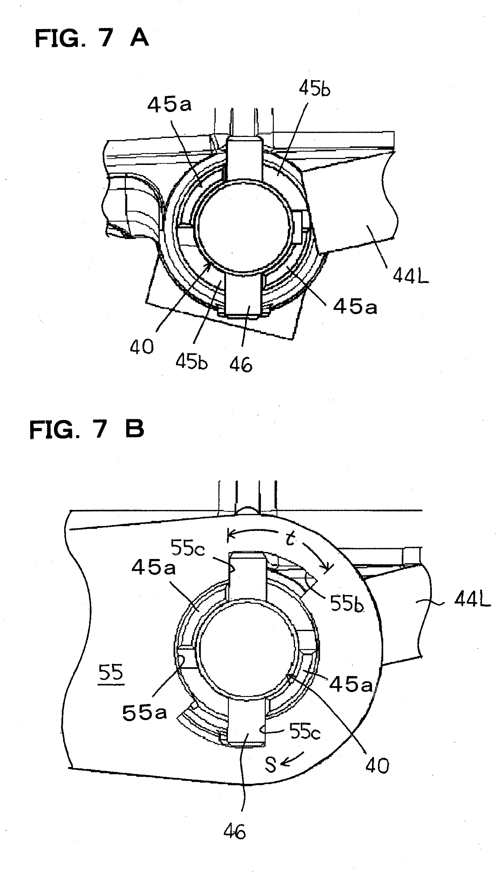

In case by rotational moving of the second tube boss 45, the end parts of the convexity parts 45a push the driven pin 46, then the brake shaft 40 can rotationally move along therewith. The two convexity parts 45a and the two concavity parts 45b are formed in turn within the respective ranges of a 1/4 circle (FIG. 7A).

Hence, in case the left brake pedal 44L is stepped upon, then by way of the second tube boss 45, the concavity parts 45b, the driven pin 46, the brake shaft 40 and the L-type engaging metal fitting 41, the left brake rod 33L can be interlocked to the left brake braking side. By the second tube boss 45, the concavity parts 45b, the driven pin 46, the brake shaft 40 and the L-type engaging metal fitting 41, the linking mechanism of the left brake side is configured.

In addition, in case the right brake pedal 44R is stepped upon, then by way of the first tube boss 42 and the L-type engaging metal fitting 43, the right brake rod 33R can be interlocked to the right brake braking side. By the first tube boss 42 and the L-type engaging metal fitting 43, the linking mechanism of the right brake side is configured.

The right brake rod 33R and the L-type engaging metal fitting 43 are connected by the long nut 47 for adjustment, the adjustment bolt 48, the locknut 49 and so forth.

The arm member 50 is provided, and the right brake rod 33R is inserted through the tip end orifice thereof. The arm member 50 is provided as a band plate member which is bent so as to broaden towards the end, the right brake rod 33R is inserted through the engaging pin 51 which left and right facing spots of the tip end side of the arm member 50 is allowed to support, and the one end of the long nut 47 is allowed to engage with the engaging pin 51. And, the left and right front end sides of the arm member 50 are connected to the paired brackets 54 and 54 which are provided on the fitting boss member 53 that is capable of rotationally moving independently with respect to the first tube boss 42 of the brake shaft 40.

On the fitting boss member 53 the parking brake interlocking arm 55 is allowed to act. Namely, the parking brake interlocking arm 55 is connected to the fitting boss member 53 by a fastening means.

Additionally, to the rear end of the parking brake interlocking arm 55, the other end of the middle rod 57 the one end of which is connected to the parking brake lever 56 is connected.

By pulling-up manipulation of the parking brake lever 56 the parking brake interlocking arm 55 is pulled up via the middle rod 57, and the fitting boss member 53 is allowed to rotationally move. Then, by way of the brackets 54 and 54, the arm member 50, the engaging pin 51 and the long nut 47 the right brake rod 33R can be interlocked to the braking side of the right brake mechanism 29R.

At this time, the right brake pedal 44R does not rotationally move and keeps a resting state, since the first tube boss 42, which supports the right brake pedal 44R, is supported with the brake shaft 40 independently with respect to the fitting boss member 53 and the adjustment bolt 48 is provided so as to be capable of freely moving through the hole part of the L-type engaging metal fitting 43 downwardly in the longer direction (the non-operation mechanism of the right brake pedal).

Additionally, on the occasion of stepping manipulation of the right brake pedal 44R, the head part of the adjustment bolt 48 which is inserted through the L-type engaging metal fitting 43 can downwardly move along with the L-type engaging metal fitting 43. On this occasion, the right brake rod 33R slides with the engaging pin 51 remaining, and the arm member 50 and so forth are separated from the interlocking state.

Nextly, descriptions are given regarding linking of the parking brake interlocking arm 55 and the brake shaft 40 (FIG. 7B).

The convexity parts 45a and concavity parts 45b, which are formed on the second tube boss 45 that supports the left brake pedal 44L, and the driven pin 46 are relevant.

Specifically, in the parking brake interlocking arm 55, the annulation hole 55a is formed through which the second tube boss 45 is capable of going from the machine body central side. On the outer periphery side of the annulation hole 55a, the annulation notches 55b and 55b are formed at two spots with a diameter which is allowed to coincide with the length of the driven pin 46.

Specifically, with respect to the operation rotation direction s by pulling-up manipulation of the parking brake lever 56, the one end faces 55c and 55c of the annulation notches 55b and 55b are configured to engage with the driven pin 46.

By contrast, even in case the driven pin 46 moves via the convexity parts 45a by stepping of the left brake pedal 44L, it does not interfere with the parking brake interlocking arm 55 regarding the predetermined ranges t. That is to say, the left brake pedal 44L does not interlock in the ranges of the annulation notches 55b and 55b and keeps a resting state (the non-operation mechanism of the left brake pedal).

The parking brake lever 56 is installed on the side face of the front part transmission case 7, via the base member 58, so as to be capable of rotationally moving upward and downward around the supporting shaft 59. To the configuration portion of the lower side of the lever part, which is configured in the front side gripping part, the one end of the middle rod 57 is connected. And, the other end is connected to the parking brake interlocking arm 55.

By appropriately lengthening the front and rear length of the parking brake interlocking arm 55, when the parking brake lever 56 is pulled up around the supporting shaft 59, pulling-up action force of the parking brake lever 56 can be allowed to be small. And, since the action direction of the middle rod 57 does not vary so much, arrangement such that twisting and so forth are less prone to be generated can be carried out. By allowing the configuration to be such that the length adjustment of the middle rod 57 is enabled, the above-mentioned effect becomes certain.

To the arm parts of the left and right brake pedals 44L and 44R, lock plates for left and right connection are attached so that left and right locking or releasing is enabled.

When brake manipulation is carried out during ordinary working or during traveling on the road and so forth, the lock plates are allowed to be in the left and right locking state and, with the right foot, the frontward left and right brake pedals 44L and 44R are stepped upon at the same time or the one of them is stepped upon. Then, the rear wheels 3L and 3R of the left and right are braked at the same time, and speed-reduction of the vehicle body is carried out. In a case where complete stopping is allowed to be carried out, with the left foot the clutch pedal 60 is stepped upon.

On the other hand, on the occasion of working in a farm field, in a case of turning at a farm field end, the lock plates are allowed to be in the left and right locking releasing state. At the same time of manipulation of the steering handle 12, the right foot is shifted left and right, and the left brake pedal 44L or the right brake pedal 44R is stepped upon in such a manner that the left brake mechanism 29L or the right brake mechanism 29R, which is on the turning innerside, is interlocked. By means of this, the brake of the turning innerside is braked, and turning of the vehicle body can be carried out with a turning radius small.

In a parking state where the vehicle body is stopped, the parking brake lever 56 is pulled up. By means of this, the parking brake interlocking arm 55 is allowed to rotationally move in the operation rotation direction s, and the end faces 55c and 55c of the annulation notches 55b and 55b of the parking brake interlocking arm 55 engage with the driven pin 46, and allow the brake shaft 40 to rotationally move.

Because of this, the left brake rod 33L is interlocked, and the left brake mechanism 29L is allowed to act. At the same time, rotational moving of the parking brake interlocking arm 55, by way of the brackets 54 and 54, the arm member 50, the engaging pin 51 and the long nut 47, interlocks the right brake rod 33R, and allows the right brake mechanism 29R to act.

Using the brake shaft 40 which supports the left and right brake pedals 44L and 44R, configured is a linking means such as the parking brake interlocking arm 55 and so forth which link to the parking brake lever 56. And, during manipulation of the parking brake lever 56, interlocking to the left and right brake pedals 44L and 44R is shut off.

Hence, manipulation force of the parking brake lever 56 can be reduced. And, since linking to the parking brake lever 56 is carried out, focusing on the brake shaft 40, configuration members are simplified and downsizing can be realized.

Nextly, descriptions are given regarding an adjustment method of the brake interlocking configuration.

Firstly, descriptions are given regarding the right brake rod 33R.

The long nut 47 is adjusted in such a manner that shakiness of the arm member 50 is allowed to be got rid of, and further adjusted are the screwing length of the adjustment bolt 48 which fits into the long nut 47 with a screw, the joining situation of the long nut 47 and engaging pin 51, and so forth. And, fixing with the locknut 49 is finally carried out.

On the other hand, regarding the left brake rod 33L, by the locknut 61 which is provided at the end of the left brake rod 33L, the engaging state with the L-type engaging metal fitting 41 can be adjusted.

Further, descriptions are given regarding the configuration of the safety frame (ROPS, Roll-Over Protective Structure) 65.

Used are the base frames 66L and 66R of the left and right which are provided on the rear axle cases 15L and 15R, and the protection frame 67 the upper part of which is connected.

On the upper faces of the base frames 66L and 66R, the brackets 66a and 66a are provided, and the brackets 67a and 67a of the left and right which are provided on the side of the protection frame 67 are, sandwiching the left and right rear wheel fenders 19 and 19, assembled in a joining state.

The connection frame 69 which connects the left and right of the lower end side of the protection frame 67 is provided and, at the left and right middle part of the connection frame 69, the vertical frame 70 is configured in such a manner that the vertical frame supports the connection frame 69.

Namely, the vertical frame 70 is constituted from the vertical frame part 70a, the pedestal part 70b and the upper face flange part 70c. The vertical frame part 70a and the pedestal part 70b are formed with bending processing of a band plate member which accompanies integral reinforcing, and the upper face flange part 70c is separately integrated with welding and so forth of a molded component to the upper face of the vertical frame part 70a.

Provided on the upper part of the rear part transmission case 8 is the oil hydraulic case 71 which internally installs an oil hydraulic cylinder that is configured to allow the lift arms 18 and 18 to interlock, and on the upper face of the oil hydraulic case 71 the pedestal part 70b is placed and fixed.

The protection frame 67 is constituted from the lower part side frame parts 67b and 67b on which the brackets 67a and 67a are provided, and the upper part side frame part 67c which is provided in such a manner that the upper part side frame part communicates with the lower part side frame parts 67b and 67b. On the lower part side frame parts 67b and 67b the turn signal lamps 73 and 73 are provided.

Between the lower part side frame parts 67b and 67b, and the upper part side frame part 67c, the connection brackets 171 and 171 are provided which can carry out switching between the folding posture and standing posture of the upper part side frame part 67c with respect to the lower part side frame parts 67b and 67b.

The connection brackets 171 and 171 are connected, with the fulcrum pins 71b and 71b, to the brackets 71a and 71a which are fixed by welding to the lower part side frame parts 67b and 67b respectively, so that the upper part side frame part 67c is capable of rotationally moving so as to be in the standing posture or in the folding posture to the rearward.

And, in such a manner that the standing posture and the folding posture are maintained, the connection pins 71c and 71c are severally provided. The connection pins 71c and 71c are capable of being inserted into or removed from the brackets 71a and 71a selectively, and are capable of being inserted into or removed from the upper part side frame part 67c at the same time. For the upper parts of the brackets 71a and 71a, the end parts of the bolts 71d and 71d are pushed onto the corresponding front wall faces of the upper part side frame part 67c, and shakiness can be absorbed.

In the above-mentioned configuration of the safety frame 65, the left and right rear wheel fenders 19 and 19 can be supported on the base frames 66L and 66R. In addition, the protection frame 67 can be reinforced by the connection frame 69, and the connection frame 69 can be further reinforced with the vertical frame 70 of the middle part.

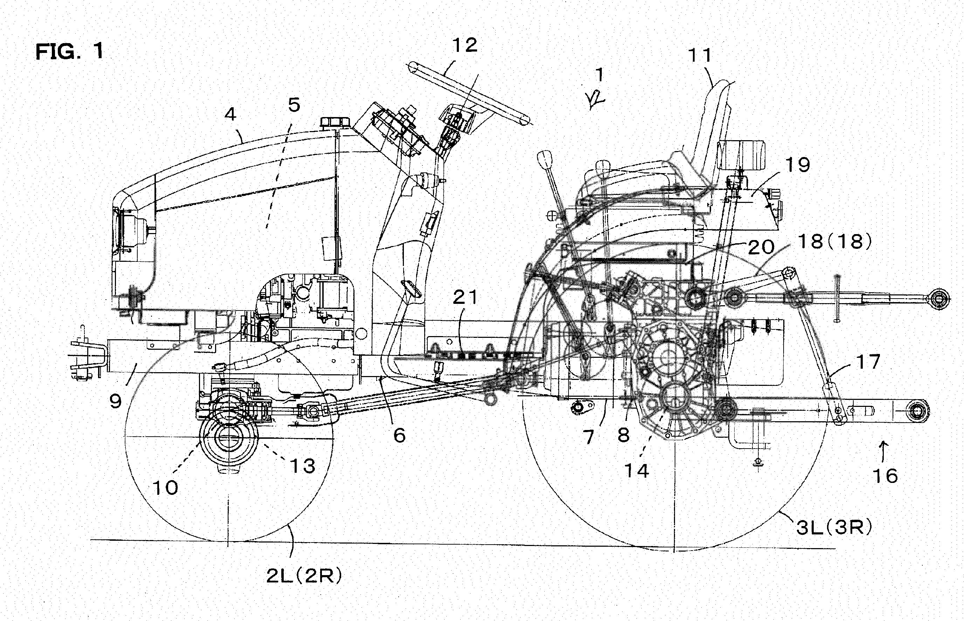

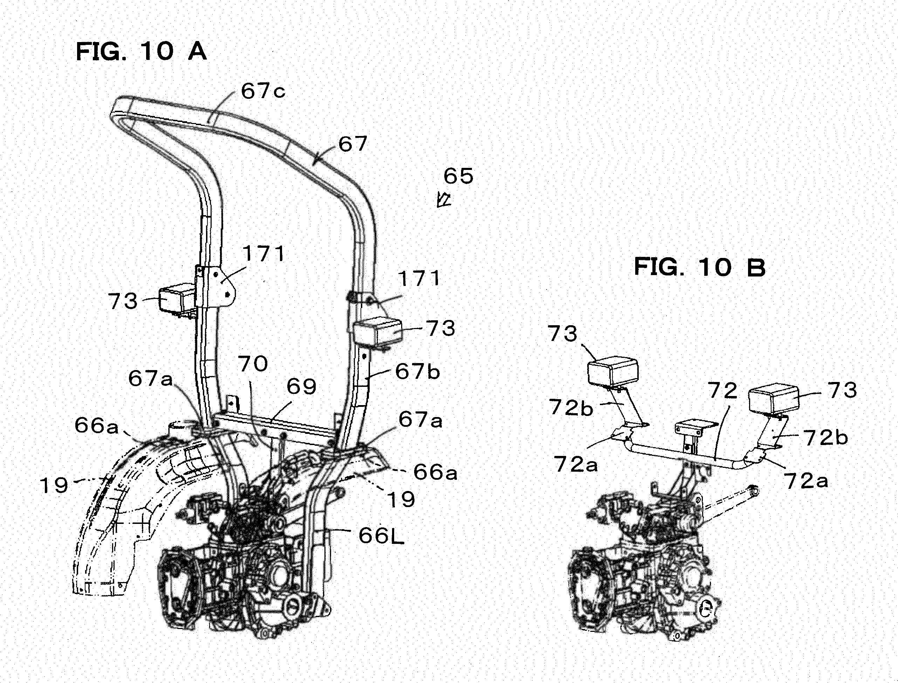

When the safety frame 65 is not provided (FIG. 10B and FIG. 1), the base frames 66L and 66R and the protection frame 67 are detached, but the vertical frame 70 is allowed to remain and via the vertical frame 70 various necessary components and so forth are assembled.

Namely, on the upper part of the vertical frame 70, the lateral frame 72 which is long left and right is provided.

The lateral frame 72 is configured with a round pipe member, and provided at the left and right end parts of the lateral frame 72 are the brackets 72a and 72a for installing the left and right rear wheel fenders 19 and 19 (FIG. 10B).

In addition, provided on the brackets 72a and 72a for the left and right rear wheel fenders 19 and 19 are the subsidiary brackets 72b and 72b, to which the turn signal lamps 73 and 73 are attached.

Additionally, the harness for the turn signal lamps 73 and 73 is drawn inside the lateral frame 72 in such a manner that it is allowed not to be viewed from the outside, and the external appearance is improved.

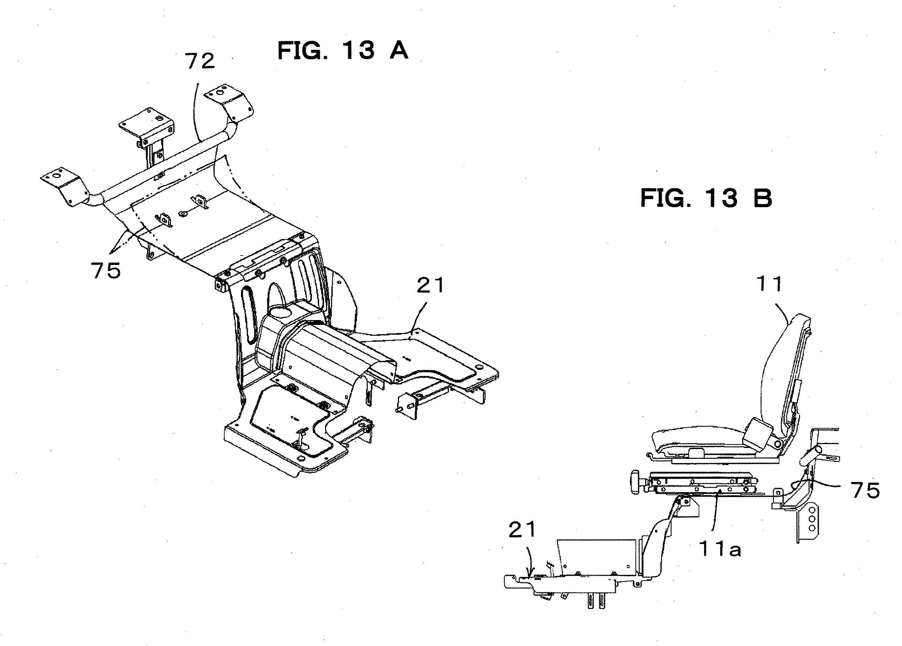

FIGS. 13A and 13B show the configuration of the lower part of the seat 11.

Instead of the seat floor 20, the flexibility cover 75 may be, as a cover which covers the upper part of the oil hydraulic case 71, installed in such a manner that the rearward side is able to be lifted up so as to be capable of opening with the front side fixed. Accompanied by the forward inclination opening posture of the seat 11, maintenance of the upper face of the oil hydraulic case 71, adjustment of the valve for implement descending speed and so forth can be performed.

Additionally, the seat 11 itself can be supported with the rail members 11a and 11a in the front and rear direction fixed to the upper part of the transmission case.

## Claims

1. A working vehicle, comprising:
a left brake mechanism (29L) which is configured to brake a left vehicle wheel (3L);
a right brake mechanism (29R) which is configured to brake a right vehicle wheel (3R);
a left brake pedal (44L) which is configured to operate in response to stepping manipulation, and via a left brake rod (33L) allow the left brake mechanism (29L) to work;
a right brake pedal (44R) which is configured to operate in response to stepping manipulation, and via a right brake rod (33R) allow the right brake mechanism (29R) to work,
**characterized in that**
the working vehicle comprises a brake lever (56) which is configured to operate in response to manual manipulation, via the left brake rod (33L) allow the left brake mechanism (29L) to work, and via the right brake rod (33R) allow the right brake mechanism (29R) to work, wherein
when the brake lever (56) operates in response to the manual manipulation, the left brake pedal (44L) and the right brake pedal (44R) do not interlock, so that resting states of the left brake pedal (44L) and the right brake pedal (44R) are kept.

2. A working vehicle according to claim 1, comprising non-operation mechanism which are configured not to allow, when the brake lever (56) operates in response to the manual manipulation, the left brake pedal (44L) and the right brake pedal (44R) to interlock, so that resting states of the left brake pedal (44L) and the right brake pedal (44R) are kept, wherein
the non-operation mechanisms are mechanisms such that:
an end part side of the left brake rod (33L) is connected to a root side of the left brake pedal (44L) via a brake shaft (40) which is capable of rotationally moving, in such a manner that the left brake pedal (44L) keeps the resting state when the brake lever (56) operates in response to the manual manipulation; and
an end part side of the right brake rod (33R) is connected to a root side of the right brake pedal (44R), in such a manner that the right brake pedal (44R) keeps the resting state when the brake lever (56) operates in response to the manual manipulation.

3. A working vehicle according to claim 2, comprising a first tube boss (42) which is anchored to the right brake pedal (44R), and is loosely fitted to the brake shaft (40) so as to be capable of rotationally moving, wherein
to the first tube boss (42), an engaging member (43) which the end part side of the right brake rod (33R) is capable of engaging with and sliding through is anchored,
when the right brake pedal (44R) operates in response to the stepping manipulation, the first tube boss (42), to which the engaging member (43) is anchored, rotationally moves, the end part side of the right brake rod (33R) engages with the engaging member (43), the right brake rod (33R) moves, and thereby the right brake mechanism (29R) works, and
when the brake lever (56) operates in response to the manual manipulation, the end part side of the right brake rod (33R) does not engage with the engaging member (43) and slides therethrough, the first tube boss (42), to which the engaging member (43) is anchored, does not rotationally move, and thereby the right brake pedal (44R), to which the first tube boss (42) is anchored, keeps the resting state.

4. A working vehicle according to claim 2, comprising a second tube boss (45) which is anchored to the left brake pedal (44L), and is loosely fitted to the brake shaft (40) so as to be capable of rotationally moving, wherein
to one end side of the brake shaft (40), a driven member (46) is anchored,
to other end side of the brake shaft (40), the end part side of the left brake rod (33L) is anchored,
in the second tube boss (45), a concavity part (45b) which the driven member (46) is capable of engaging with is formed,
when the left brake pedal (44L) operates in response to the stepping manipulation, the second tube boss (45), in which the concavity part (45b) is formed, rotationally moves, the driven member (46) engages with the concavity part (45b), the brake shaft (40), to which the driven member (46) is anchored, rotationally moves, the left brake rod (33L), the end part side of which is anchored to the brake shaft (40), moves, and thereby the left brake mechanism (29L) works, and
when the brake lever (56) operates in response to the manual manipulation, the driven member (46) does not engage with the concavity part (45b), the second tube boss (45), in which the concavity part (45b) is formed, does not rotationally move, and thereby the left brake pedal (44L), to which the second tube boss (45) is anchored, keeps the resting state.

5. A working vehicle according to any of claims 1 to 4, wherein
the brake lever (56) is connected to both of the end part side of the left brake rod (33L) and the end part side of the right brake rod (33R) via a middle rod (57) and a parking brake interlocking arm (55).

## Patentansprüche

1. Nutzfahrzeug, das umfasst:
einen linken Bremsmechanismus (29L), der zum Bremsen eines linken Fahrzeugrades (3L) eingerichtet ist;
einen rechten Bremsmechanismus (29R), der zum Bremsen eines rechten Fahrzeugrades (3R) eingerichtet ist;
ein linkes Bremspedal (44L), das so eingerichtet ist, dass es auf Fußbetätigung anspricht und den linken Bremsmechanismus (29L) über eine linke Bremsstange (33L) arbeiten lässt;
ein rechtes Bremspedal (44R), das so eingerichtet ist, dass es auf Fußbetätigung anspricht und den rechten Bremsmechanismus (29R) über eine rechte Bremsstange (33R) wirken lässt,
**dadurch gekennzeichnet, dass**
das Nutzfahrzeug einen Bremshebel (56) umfasst, der auf Handbetätigung anspricht und den linken Bremsmechanismus (29L) über die linke Bremsstange (33L) arbeiten lässt und den rechten Bremsmechanismus (29R) über die rechte Bremsstange (33R) arbeiten lässt, wobei
wenn der Bremshebel (56) auf die Handbetätigung anspricht, das linke Bremspedal (44L) und das rechte Bremspedal (44R) nicht einrücken, so dass Ruhezustände des linken Bremspedals (44L) und des rechten Bremspedals (44R) beibehalten werden.

2. Nutzfahrzeug nach Anspruch 1, das Nicht-Betätigungsmechanismen umfasst, die so eingerichtet sind, dass sie nicht zulassen, dass, wenn der Bremshebel (56) auf die Handbetätigung anspricht, das linke Bremspedal (44L) und das rechte Bremspedal (44R) einrücken, so dass Ruhezustände des linken Bremspedals (44L) und des rechten Bremspedals (44R) beibehalten werden, wobei
die Nicht-Betätigungsmechanismen Mechanismen sind, durch die:
eine Endteil-Seite der linken Bremsstange (33L) mit einer hinteren Seite des linken Bremspedals (44L) über eine Bremswelle (40) verbunden ist, die sich drehend so bewegen kann, dass das linke Bremspedal (44L) den Ruhezustand beibehält, wenn der Bremshebel (56) auf die Handbetätigung anspricht; und
eine Endteil-Seite der rechten Bremsstange (33R) mit einer hinteren Seite des rechten Bremspedals (44R) so verbunden ist, dass das rechte Bremspedal (44R) den Ruhezustand beibehält, wenn der Bremshebel (56) auf die Handbetätigung anspricht.

3. Nutzfahrzeug nach Anspruch 2, das eine erste Röhrennabe (42) umfasst, die an dem rechten Bremspedal (44R) befestigt ist und lose so auf die Bremswelle (40) aufgepasst ist, dass sie sich drehend bewegen kann, wobei
an der ersten Röhrennabe (42) ein Eingriffselement (43) befestigt ist, mit dem die Endteil-Seite der rechten Bremsstange (33R) in Eingriff kommen kann und durch das sie hindurchgleiten kann,
wenn das rechte Bremspedal (44R) auf die Fußbetätigung anspricht, die erste Röhrennabe (42), an der das Eingriffselement (43) befestigt ist, sich drehend bewegt, die Endteil-Seite der rechten Bremsstange (33R) mit dem Eingriffselement (43) in Eingriff kommt, die rechte Bremsstange (33R) sich bewegt und so der rechte Bremsmechanismus (29R) arbeitet, und
wenn der Bremshebel (56) auf die Handbetätigung anspricht, die Endteil-Seite der rechten Bremsstange (33R) nicht mit dem Eingriffselement (43) in Eingriff kommt und durch selbiges hindurchgleitet, die erste Röhrennabe (42), an der das Eingriffselement (43) befestigt ist, sich nicht drehend bewegt und so das rechte Bremspedal (44R), an dem die erste Röhrennabe (42) befestigt ist, den Ruhezustand beibehält.

4. Nutzfahrzeug nach Anspruch 2, das eine zweite Röhrennabe (45) umfasst, die an dem linken Bremspedal (44L) befestigt ist und lose so auf die Bremswelle (40) aufgepasst ist, dass sie sich drehend bewegen kann, wobei
an der Seite des einen Endes der Bremswelle (40) ein angetriebenes Element (46) befestigt ist,
an der Seite des anderen Endes der Bremswelle (40) die Endteil-Seite der linken Bremsstange (33L) befestigt ist,
in der zweiten Röhrennabe (45) ein Wölbungsteil (45b) ausgebildet ist, mit dem das angetriebene Element (46) in Eingriff kommen kann,
wenn das linke Bremspedal (44L) auf die Fußbetätigung anspricht, die zweite Röhrennabe (45), in der der Wölbungsteil (45b) ausgebildet ist, sich drehend bewegt, das angetriebene Element (46) mit dem Wölbungsteil (45b) in Eingriff kommt, die Bremswelle (40), an der das angetriebene Element (46) befestigt ist, sich drehend bewegt, die linke Bremsstange (33L), deren Endteil-Seite an der Bremswelle (40) befestigt ist, sich bewegt und so der linke Bremsmechanismus (29L) arbeitet, und
wenn der Bremshebel (56) auf die Handbetätigung anspricht, das angetriebene Element (46) nicht mit dem Wölbungsteil (45b) in Eingriff kommt, sich die zweite Röhrennabe (45), in der der Wölbungsteil (45b) ausgebildet ist, nicht drehend bewegt und so das linke Bremspedal (44L), an dem die zweite Röhrennabe (45) befestigt ist, den Ruhezustand beibehält.

5. Nutzfahrzeug nach einem der Ansprüche 1 bis 4, wobei
der Bremshebel (56) sowohl mit der Endteil-Seite der linken Bremsstange (33L) als auch der Endteil-Seite der rechten Bremsstange (33R) über eine Mittelstange (57) sowie einen Feststellbremsen-Einrückarm (55) verbunden ist.

## Revendications

1. Véhicule de travail, comprenant :
un mécanisme de frein gauche (29L) qui est configuré pour freiner une roue de véhicule gauche (3L) ;
un mécanisme de frein droit (29R) qui est configuré pour freiner une roue de véhicule droite (3R) ;
une pédale de frein gauche (44L) qui est configurée pour fonctionner en réponse à une manipulation pas-à-pas et, via une tige de frein gauche (33L), permettre au mécanisme de frein gauche (29L) de fonctionner ;
une pédale de frein droite (44R) qui est configurée pour fonctionner en réponse à une manipulation pas-à-pas et, via une tige de frein droite (33R), permettre au mécanisme de frein droit (29R) de fonctionner,
**caractérisé en ce que**
le véhicule de travail comprend un levier de frein (56) qui est configuré pour fonctionner en réponse à une manipulation manuelle, permettre au mécanisme de frein gauche (29L) de fonctionner via la tige de frein gauche (33L), et permettre au mécanisme de frein droit (29R) de fonctionner via la tige de frein droite (33R), dans lequel
lorsque le levier de frein (56) fonctionne en réponse à la manipulation manuelle, la pédale de frein gauche (44L) et la pédale de frein droite (44R) ne se verrouillent pas mutuellement, de sorte que des états de repos de la pédale de frein gauche et de la pédale de frein droite (44R) sont maintenus.

2. Véhicule de travail selon la revendication 1, comprenant un mécanisme de non-fonctionnement qui est configuré pour ne pas permettre, lorsque le levier de frein (56) fonctionne en réponse à la manipulation manuelle, à la pédale de frein gauche (44L) et à la pédale de frein droite (44R) de se verrouiller mutuellement, de sorte que des états de repos de la pédale de frein gauche (44L) et de la pédale de frein droite (44R) soient maintenus, dans lequel
les mécanismes de non-fonctionnement sont des mécanismes tels :
qu'un côté de partie d'extrémité de la tige de frein gauche (33L) soit reliée à un côté de racine de la pédale de frein gauche (44L) via un arbre de frein (40) qui est capable de se déplacer en rotation, d'une manière telle que la pédale de frein gauche (44L) conserve l'état de repos lorsque le levier de frein (56) fonctionne en réponse à la manipulation manuelle ; et
un côté de partie extrémité de la tige de frein droite (33R) est relié à un côté de racine de la pédale de frein droite (44R), d'une manière telle que la pédale de frein droite (44R) conserve l'état de repos lorsque le levier de frein (56) fonctionne en réponse à la manipulation manuelle.

3. Véhicule de travail selon la revendication 2, comprenant un premier bossage de tube (42) qui est ancré à la pédale de frein droite (44R), et est monté de façon lâche sur l'arbre de frein (40) de façon à pouvoir se déplacer en rotation, dans lequel sur le premier bossage de tube (42) est ancré un élément de mise en prise (43) avec lequel le côté de partie d'extrémité de la tige de frein droite (33R) est capable de venir en prise et de coulisser à travers celui-ci,
lorsque la pédale de frein droite (44R) fonctionne en réponse à la manipulation pas à pas, le premier bossage de tube (42), auquel l'élément de mise en prise (43) est ancré, se déplace en rotation, le côté de partie extrémité de la tige de frein droite (33R) vient en prise avec l'élément de mise en prise (43), la tige de frein droite (33R) se déplace, et ainsi le mécanisme de frein droit (29R) fonctionne, et
lorsque le levier de frein (56) fonctionne en réponse à la manipulation manuelle, le côté de partie d'extrémité de la tige de frein droite (33R) ne vient pas en prise avec l'élément de mise en prise (43) et coulisse à travers celui-ci, le premier bossage de tube (42) auquel l'élément de mise en prise (43) est ancré ne se déplace pas en rotation, et ainsi la pédale de frein droite (44R), à laquelle le premier bossage de tube (42) est ancré, conserve l'état de repos.

4. Véhicule de travail selon la revendication 2, comprenant un second bossage de tube (45) qui est ancré à la pédale de frein gauche (44L), et est monté de manière lâche sur l'arbre de frein (40) de façon à pouvoir se déplacer en rotation, dans lequel un élément entraîné (46) est ancré à un premier côté d'extrémité de l'arbre de frein (40),
le côté de partie d'extrémité de la tige de frein gauche (33L) est ancré à l'autre côté d'extrémité de l'arbre de frein (40),
une partie concave (45b) avec laquelle l'élément entraîné (46) est capable de venir en prise est formée dans le second bossage de tube (45),
lorsque la pédale de frein gauche (44L) fonctionne en réponse à la manipulation pas-à-pas, le second bossage de tube (45) dans lequel est formée la partie concave (45b) se déplace en rotation, l'élément entraîné (46) vient en prise avec la partie concave (45b), l'arbre de frein (40), auquel l'élément entraîné (46) est ancré, se déplace en rotation, la tige de frein gauche (33L), dont le côté de partie d'extrémité est ancré à l'arbre de frein (40), se déplace, et ainsi le mécanisme de frein gauche (29L) fonctionne, et
lorsque le levier de frein (56) fonctionne en réponse à la manipulation manuelle, l'élément entraîné (46) ne vient pas en prise avec la partie concave (45b), le second bossage de tube (45), dans lequel la partie concave (45b) est formée, ne se déplace pas en rotation, et ainsi la pédale de frein gauche (44L), à laquelle le second bossage de tube (45) est ancré, conserve l'état de repos.

5. Véhicule de travail selon l'une quelconque des revendications 1 à 4, dans lequel le levier de frein (56) est relié au côté de partie d'extrémité de la tige de frein gauche (33L) et au côté de partie d'extrémité de la tige de frein droite (33R) par une tige médiane (57) et un bras de verrouillage mutuel de frein de stationnement (55).
